Europäisches Patentamt

European Patent Office

Office européen des brevets

(19)

(11) Veröffentlichungsnummer: **0 460 264 A1**

(12) **EUROPÄISCHE PATENTANMELDUNG**

(21) Anmeldenummer: 90110774.8

(22) Anmeldetag: 07.06.90

(51) Int. Cl.⁵: **F16B 39/30**, F16B 39/282, F16B 33/02

(43) Veröffentlichungstag der Anmeldung:
**11.12.91 Patentblatt 91/50**

(84) Benannte Vertragsstaaten:
**AT BE CH DE DK ES FR GB GR IT LI LU NL SE**

(71) Anmelder: **HABERLE, Walter**
**Gronauer Weg 16**
**W-6368 Bad Vilbel(DE)**

(72) Erfinder: **HABERLE, Walter**
**Gronauer Weg 16**
**W-6368 Bad Vilbel(DE)**

(74) Vertreter: **Schlagwein, Udo, Dipl.-Ing.**
**Anwaltsbüro Ruppert & Schlagwein**
**Frankfurter Strasse 34**
**W-6350 Bad Nauheim(DE)**

(54) **Schraube.**

(57) Eine Schraube hat auf ihrem Schaft (1) ein Gewinde (3), welches durch eine umlaufende Nut (4) in zwei Gewindebereiche (a, b) mit unterschiedlicher Gewindesteigung aufgeteilt ist. Gelangt beim Einziehen der Schraube in eine Gewindebohrung der Bereich mit anderer Gewindesteigung in die Gewindebohrung, dann kommt es durch die geringfügig unterschiedliche Gewindesteigung zu einer gegenseitigen Verspannung der Bereiche (a, b) des Schaftes (1) und damit zu einer Schraubensicherung.

Fig. 1

EP 0 460 264 A1

Die Erfindung bezieht sich auf eine Schraube mit einem ein Gewinde aufweisenden Schaft. Schrauben dieser Art sind das in der Technik meistverwendete Verbindungselement und deshalb allgemein bekannt.

Häufig ist es bei Schraubverbindungen erforderlich, die Schraube gegen ein ungewolltes Lösen zu sichern. Das kann man auf sehr vielfältige Weise erreichen, beispielsweise durch Unterlegen eines Federringes, einer Fächerscheibe, Zahnscheibe oder Federscheibe, so daß sich der Kopf der Schraube bei festgezogener Schraube auf ein solches Bauteil aufsetzt. Bekannt sind auch Sicherungsbleche, Splinte oder Drahtbügel, mit denen man einen Schraubenkopf vor Verdrehen sichern kann. Muttern sichert man oftmals durch Kontern.

Allen bekannten Schraubensicherungen ist gemeinsam, daß sie ein zusätzliches Bauteil erfordern und deshalb relativ teuer sind. Weiterhin besteht die Gefahr, daß aus Bequemlichkeit oder Unachtsamkeit auf die erforderliche Schraubensicherung verzichtet wird, so daß Schrauben ungesichert bleiben.

Der Erfindung liegt die Aufgabe zugrunde, eine Schraube der eingangs genannten Art so auszubilden, daß sie ohne ein zusätzliches Bauteil mit dem Festziehen zwangsläufig sichert.

Diese Aufgabe wird erfindungsgemäß dadurch gelöst, daß ein Endbereich des Gewindes eine gegenüber dem übrigen Bereich des Gewindes abweichende Gewindesteigung aufweist.

Durch diese Gestaltung der Schraube kommt es zu einer gegenseitigen Verspannung zweier Schaftbereiche, sobald der Endbereich des Gewindes des Schaftes in das Gewinde der Gewindebohrung eingreift, in welche die Schraube gedreht wird. Die Unterschiede in der Steigung dürfen natürlich nicht so stark sein, daß es zu einer Zerstörung des Gewindes der Gewindebohrung oder des Schaftes kommt. Die gegenseitige Verspannung wirkt vergleichbar wie das bei Muttern gebräuchliche Kontern. Die Schraube wird deshalb auf sehr einfache Weise zwangsläufig gesichert, so daß keinerlei Aufwand zum Sichern erforderlich wird und das Sichern nicht vergessen werden kann.

Bei Schrauben mit einem üblichen Schaft wird man nahe des Kopfes einen kurzen Gewindebereich mit gegenüber dem übrigen Bereich größerer oder kleinerer Gewindesteigung versehen, so daß es kurz vor dem vollständigen Einschrauben zu der angestrebten Verspannung kommt. Bei anders gestalteten Schrauben kann es jedoch auch vorteilhaft sein, einen kurzen, vorderen Schaftbereich mit Gewinde anderer Steigung auszubilden.

Besonders wirksam ist die Schraubensicherung, wenn die Schraube aus Kunststoff besteht, weil sie dann aufgrund ihrer großen Elastizität leicht verspannbar ist, ohne daß die Gefahr einer Zerstörung des Gewindes der Schraube oder des Gewindeloches besteht.

Fertigungstechnisch vorteilhaft ist es, wenn die beiden Bereiche unterschiedlicher Gewindesteigung durch eine umlaufende Nut im Schaft voneinander getrennt sind.

Die erfindungsgemäße Schraube kann ohne Drehung zunächst relativ weit in ein Gewindeloch eingeschoben werden, so daß sie dort provisorisch gehalten ist, wenn gemäß einer besonders vorteilhaften Ausgestaltung der Erfindung der Schaft aus einem elastisch federnden Material besteht und von einem zentrisch in Längsrichtung verlaufenden Schlitz in zwei Hälften aufgeteilt und an den beiden Längsseiten mit zwei senkrecht zum Schlitz und spitzwinklig zueinander verlaufenden Freiflächen versehen ist. Durch die Freiflächen verringert sich der Schaftdurchmesser zum vorderen Schaftende hin an zwei gegenüberliegenden Seiten. Durch Zusammendrücken des Schlitzes läßt sich der Schaftdurchmesser auch von zwei hierzu in einem Winkel von 90 Grad stehenden Seiten vermindern, so daß er insgesamt nach vorn hin geringer wird. Dadurch ratscht die Schraube zunächst über das Gewinde der Gewindebohrung, wenn man sie in eine Gewindebohrung schiebt. Erst wenn die Schraube weit in der Gewindebohrung sitzt, kann man sie mit wenigen Umdrehungen festziehen. Man erspart sich dadurch das zeitaufwendige Einziehen der Schraube durch Drehen.

Zur weiteren Erleichterung des Einschiebens der Schraube in eine Gewindebohrung trägt es bei, wenn der vordere Teil des Schaftes mit einer kegelförmigen Verjüngung versehen ist.

Besonders fest ist die Schraube in einer Gewindebohrung gehalten, wenn die beiden Hälften des Schaftes gespreizt zueinander angeordnet sind.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in

Fig. 1   eine Seitenansicht einer erfindungsgemäß gestalteten Schraube,

Fig. 2   eine Draufsicht auf eine zweite Ausführungsform einer erfindungsgemäßen Schraube,

Fig. 3   eine Seitenansicht der Schraube nach der Figur 2,

Fig. 4   eine gegenüber Figur 3 um 90 Grad gedrehte Seitenansicht der Schraube.

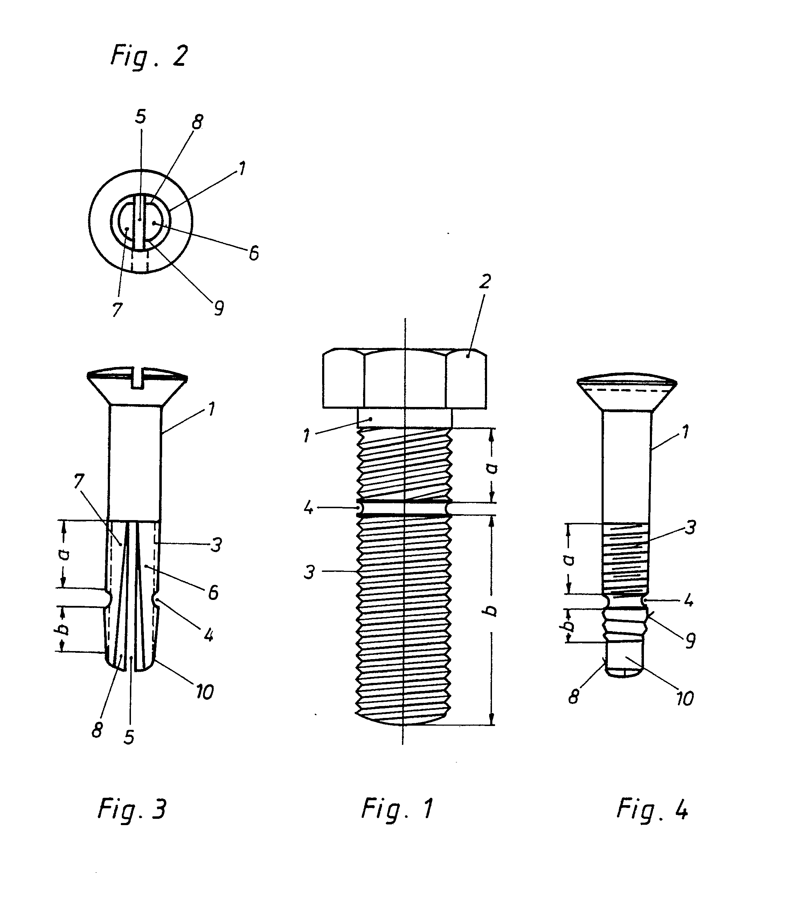

Die in Figur 1 dargestellte Schraube hat einen Schaft 1 und einen üblichen Kopf 2. Der Schaft 1 hat auf seiner Außenmantelfläche ein Gewinde 3, welches durch eine umlaufende Nut 4 in zwei Bereiche a und b aufgeteilt ist. Der kopfseitige Endbereich a hat bei diesem Ausführungsbeispiel eine geringfügig größere Gewindesteigung als der Bereich b.

Eine nicht dargestellte Gewindebohrung hat ein Gewinde mit derselben Steigung wie der Bereich b. Schraubt man die erfindungsgemäße Schraube in eine solche Gewindebohrung, so ist das zunächst wie bei üblichen Schrauben möglich. Gelangt kurz vor dem vollständigen Einschrauben der Endbereich a in die Gewindebohrung, so hat dieser die Tendenz, schneller in die Gewindebohrung hineinzugelangen als der Bereich b. Es kommt dadurch zu einer Verspannung zwischen den Bereichen a und b, was zu einer Schraubensicherung führt.

Die Figuren 2, 3 und 4 zeigen eine vorzugsweise aus Kunststoff gefertigte Schraube, welche beispielsweise im Hausbereich als rasch einzuziehendes Befestigungselement vorteilhaft ist. Wie die Figuren 2 und 3 zeigen, hat der Schaft 1 einen in Längsrichtung verlaufenden Schlitz 5, der den vorderen Teil des Schaftes 1 in zwei Hälften 6, 7 aufteilt. An den beiden Längsseiten des Schaftes 1 sind zwei senkrecht zum Schlitz 5 verlaufende Freiflächen 8, 9 vorgesehen, die in einem spitzen Winkel zueinander verlaufen. Der vordere Teil des Schaftes 1 hat eine kegelförmige Verjüngung 10.

Genau wie bei der zuvor beschriebenen Schraube ist im Schaft 1 eine umlaufende Nut 4 vorhanden, die das Gewinde 3 des Schaftes 1 in zwei Bereiche a und b mit Gewinde unterschiedlicher Steigung aufteilt. Wird die Schraube nach den Figuren 2, 3 und 4 in eine Gewindebohrung eingeschoben, dann drückt sich der Schlitz 7 zunächst zusammen. Dadurch kann man die Schraube ohne Drehung teilweise in die Gewindebohrung einschieben, wobei ihr Gewinde über das Gewinde der Gewindebohrung ratscht. Erst wenn die Schraube teilweise in die Gewindebohrung geschoben ist, zieht man sie mittels eines Schraubendrehers fest. Durch die unterschiedliche Gewindesteigung im Bereich a und b kommt es beim Festziehen der Schraube zu einer gegenseitigen Verspannung der Bereiche a und b und dadurch wiederum zu der angestrebten Schraubensicherung.

**Patentansprüche**

1. Schraube mit einem ein Gewinde (3) aufweisenden Schaft (1), dadurch gekennzeichnet, daß ein Endbereich (a) des Gewindes (3) eine gegenüber dem übrigen Bereich (b) des Gewindes (3) abweichende Gewindesteigung aufweist.

2. Schraube nach Anspruch 1, dadurch gekennzeichnet, daß die Schraube aus Kunststoff besteht.

3. Schraube nach den Ansprüchen 1 oder 2, dadurch gekennzeichnet, daß die beiden Bereiche (a, b) unterschiedlicher Gewindesteigung durch eine umlaufende Nut (4) im Schaft (1) voneinander getrennt sind.

4. Schraube nach zumindest einem der vorangehenden Ansprüche, dadurch gekennzeichnet, daß der Schaft (1) von einem zentrisch in Längsrichtung verlaufenden Schlitz (5) in zwei Hälften (6, 7) aufgeteilt und an den beiden Längsseiten mit zwei senkrecht zum Schlitz (5) und spitzwinklig zueinander verlaufenden Freiflächen (8, 9) versehen ist.

5. Schraube nach Anspruch 4, dadurch gekennzeichnet, daß der vordere Teil des Schaftes (1) mit einer kegelförmigen Verjüngung (10) versehen ist.

6. Schraube nach zumindest einem der vorangehenden Ansprüche, dadurch gekennzeichnet, daß die beiden Hälften (6, 7) des Schaftes (1) gespreizt zueinander angeordnet sind.

Fig. 2

Fig. 3

Fig. 1

Fig. 4

4

**Europäisches Patentamt**

# EUROPÄISCHER RECHERCHENBERICHT

Nummer der Anmeldung

# EP 90 11 0774

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | GB-A-2 086 516 (RM AUTOMATION LTD) <br> * das ganze Dokument * <br> — — — | 1-3,4-6 | F 16 B 39/30 <br> F 16 B 39/282 <br> F 16 B 33/02 |
| Y | GB-A-5 486 50 (EMIL THEODORE HOLTZ) <br> * Seite 1, Zeile 11 - Seite 3, Zeile 109; Figuren 1-7 * <br> — — — | 4-6 | |
| A | DE-C-9 040 13 (HERMANN FRIEDRICH ALBRECHT) <br> — — — — — | | |

|  |
|---|
| **RECHERCHIERTE SACHGEBIETE (Int. Cl.5)** |
| F 16 B |

Der vorliegende Recherchenbericht wurde für alle Patentansprüche erstellt

| Recherchenort | Abschlußdatum der Recherche | Prüfer |
|---|---|---|
| Den Haag | 08 Februar 91 | ARESO Y SALINAS J. |